Europäisches Patentamt

**European Patent Office**

Office européen des brevets

(19)

(11) Veröffentlichungsnummer: **0 210 353**
**B1**

(12) # EUROPÄISCHE PATENTSCHRIFT

(45) Veröffentlichungstag der Patentschrift :
**30.08.89**

(51) Int. Cl.⁴: **F 16 D 25/10**

(21) Anmeldenummer : **86106420.2**

(22) Anmeldetag : **12.05.86**

(54) **Doppelkupplung für ein Kraftfahrzeuggetriebe.**

(30) Priorität : **25.07.85 DE 3526630**

(43) Veröffentlichungstag der Anmeldung :
**04.02.87 Patentblatt 87/06**

(45) Bekanntmachung des Hinweises auf die Patenterteilung : **30.08.89 Patentblatt 89/35**

(84) Benannte Vertragsstaaten :
**CH DE FR GB IT LI NL SE**

(56) Entgegenhaltungen :
**DE–A– 1 902 426**
**DE–A– 1 956 781**
**US–A– 3 037 602**
**US–A– 3 760 918**

(73) Patentinhaber : **Dr.Ing.h.c. F. Porsche Aktiengesells-chaft**
**Porschestrasse 42**
**D-7000 Stuttgart 40 (DE)**

(72) Erfinder : **Knoblauch, Richard**
**Brucknerweg 1**
**D-7257 Ditzingen 5 (DE)**

EP 0 210 353 B1

## Beschreibung

Die Erfindung betrifft eine hydraulisch betätigbare Doppelkupplung für ein Kraftfahrzeuggetriebe nach dem Oberbegriff des Anspruchs 1.

Eine solche in US-A-3 037 602 beschriebene Doppelkupplung kann dazu dienen, ein Geschwindigkeitswechselgetriebe eines Kraftfahrzeugs ohne Zugkraftunterbrechung schalten zu können. Hierzu ist eine zentrale Durchgangswelle zum Getriebe der einen Gruppe von Getriebegängen, z. B. dem ersten, dritten und fünften Gang, eine zu ihr konzentrische Hohlwelle dem zweiten und vierten Gang zugeordnet. Beide Wellen sind mit Kupplungsscheiben verbunden, von denen die eine von der einen Seite, die andere von der anderen Seite her an eine Mittenplatte des Kupplungsgehäuses anlegbar ist. Das Kupplungsgehäuse steht in Antriebsverbindung zur Motorkurbelwelle und rotiert mit ihr. Zur Kupplungsbetätigung dienen zwei konzentrische Ringkolben, die in einem feststehenden Gehäuseteil angeordnet sind und hydraulisch oder pneumatisch betätigbar sind. Nachteilig ist hierbei, daß die Mittenplatte zum Andrücken der einen Kupplungsscheibe gegenüber dem Kupplungsgehäuse verschieblich sein muß, was bei den hohen Drehzahlen des Kupplungsgehäuses zu Instabilitäten führt.

Die Aufgabe der Erfindung besteht darin, die Doppelkupplung funktionssicherer zu gestalten.

Eine Lösung dieser Aufgabe gelingt mit den kennzeichnenden Merkmalen des Anspruchs 1. Da die Mittenplatte fest am Kupplungsgehäuse angebracht ist, bildet sie mit ihm zusammen ein starres Aggregat, das durch statisches und dynamisches Auswuchten frei von einseitigen Massenkräften ist. An der gehäusefesten Mittenplatte ergeben sich für die beiden Kupplungsscheiben eine stabile Anlage und gleich große Andrückkräfte zum Betätigen der Doppelkupplung, so daß sich ein Verschleiß symmetrisch auf beiden Seiten der Mittenplatte verteilt und ein nachträgliches Auswuchten nicht erforderlich ist. Diese konstruktive Gestaltung läßt eine hohe Funktionssicherheit der Doppelkupplung erwarten.

Da die Doppelkupplung in einen Trockenteil aus einem Kupplungsgehäuse, den Kupplungsscheiben und dazugehörigen Druckplatten und einen durch die Hydraulikplatte gebildeten Naßteil aufgeteilt ist, lassen sich die Kupplungsscheiben völlig trocken halten, wodurch definierte Reibwerte gewährleistet sind. Infolge der Aufteilung in Trockenteil und Naßteil ist eine geringe Leckage an den Ringkolben zulässig.

Die Hydraulikplatte, die alle flüssigkeitsführenden Kanäle enthält, ist aus einer Grundplatte und einer Deckplatte zusammengesetzt. An der Trennebene von Grundplatte und Deckplatte sind die Ringnuten für die Ringkolben eingearbeitet, was für die Fertigung und Montage der Doppelkupplung sehr vorteilhaft ist.

Ein Ausführungsbeispiel der Erfindung ist in der Zeichnung dargestellt und wird nachfolgend erläutert.

Es zeigt:

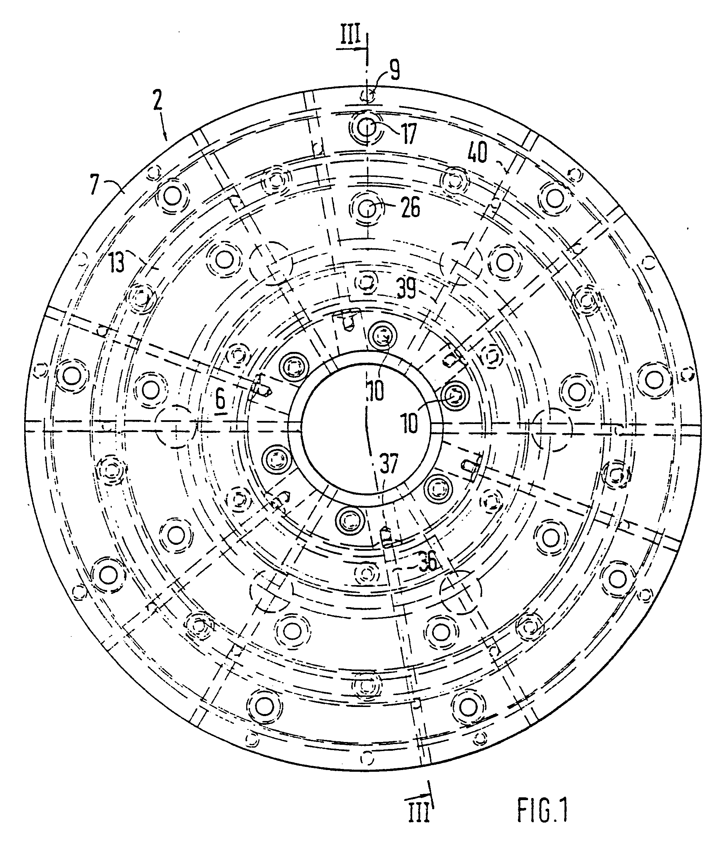

Fig. 1 eine Ansicht auf die Doppelkupplung von rechts,

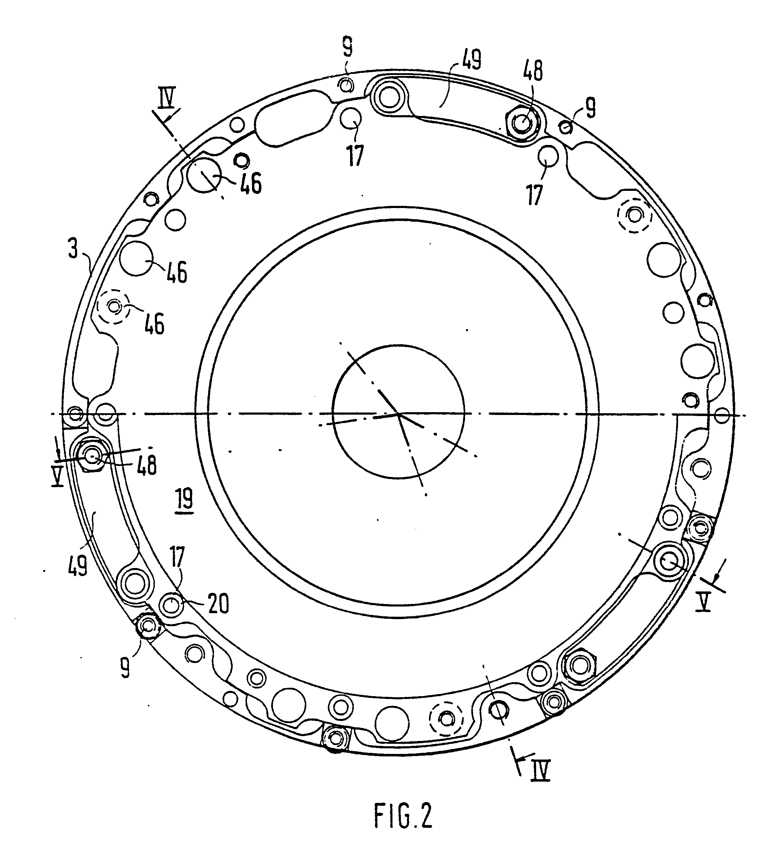

Fig. 2 eine Ansicht auf die Doppelkupplung von links,

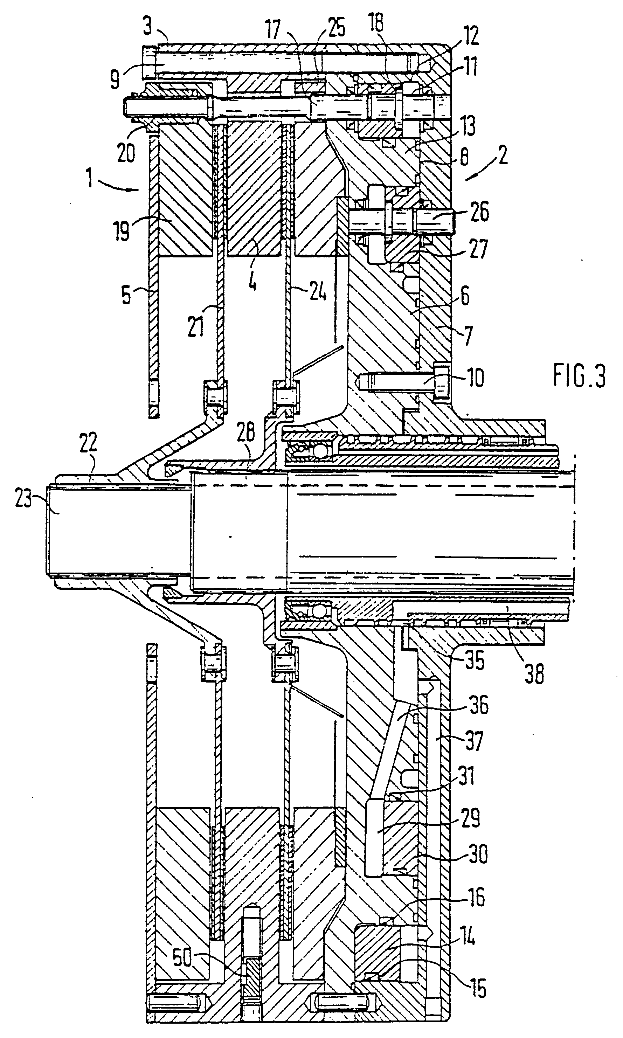

Fig. 3 einen Schnitt nach der Linie III-III der Fig. 1,

Fig. 4 einen Schnitt nach der Linie IV-IV der Fig. 2,

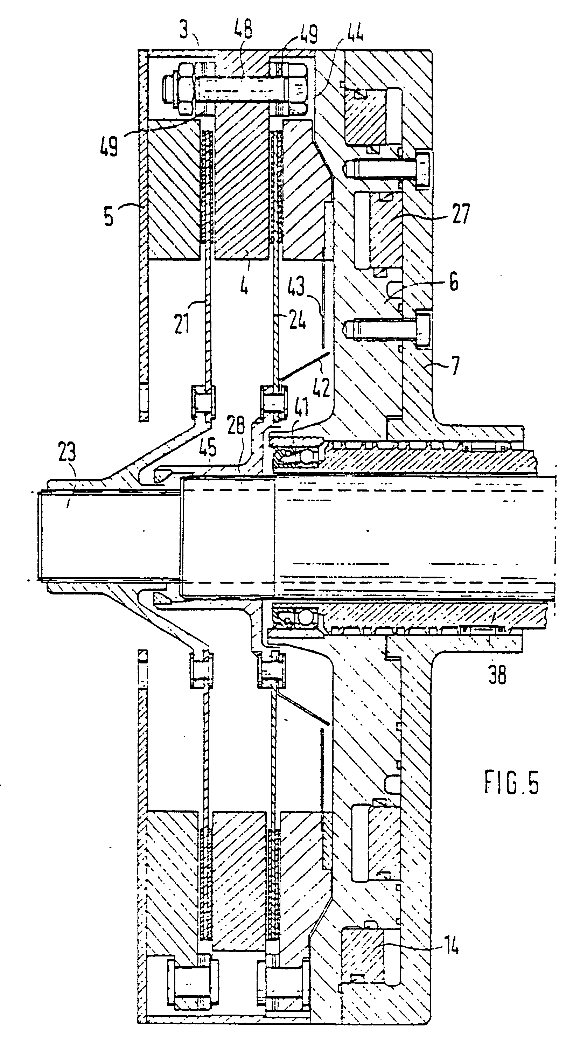

Fig. 5 einen Schnitt nach der Linie V-V der Fig. 2.

Eine Doppelkupplung ist unterteilt in einen Trockenbereich, der von einem Kupplungsgehäuse 1 umschlossen ist und in einen Naßbereich, der in einer am Kupplungsgehäuse 1 angeschraubten Hydraulikplatte 2 untergebracht ist. Das Kupplunsgehäuse 1 besteht aus einem Mantelteil 3, an dem eine Mittenplatte 4 angebracht ist und einer mit dem Mantelteil 3 verschraubten Mitnehmerplatte 5, die an eine nicht gezeichnete Motorkurbelwelle anflanschbar ist. die Hydraulikplatte 2 ist aus einer Grundplatte 6 und einer Deckplatte 7 zusammengesetzt, die an einer Trennebene 8 aneinander anliegen. Durch mehrere am Umfang symmetrisch verteilte Schrauben 9 sind die Mitnehmerplatte 5, das Mantelteil 3 sowie die Grundplatte 6 und Deckplatte 7 zu einem festen Verband miteinander verschraubt. Zur Verschraubung von Grundplatte und Deckplatte dienen zusätzlich die in Nabennähe angeordneten Schrauben 10.

An der Trennebene 8 ist eine äußere Ringnut 11 durch die äußere Ringfläche 12 einer Ausdrehung der Deckplatte 7 und einen im Durchmesser kleineren Zapfenfortsatz 13 der Grundplatte 6 gebildet. In der äußeren Ringnut 11 ist ein äußerer Ringkolben 14 geführt und zur Deckplatte hin mit einem Dichtring 15, zur Grundplatte hin mit einem Dichtring 16 abgedichtet. Den äußeren Ringkolben 14 durchragen mehrere, als Zuganker ausgebildete Zapfen 17, die in der Deckplatte 7 und der Grundplatte 6 abgedichtet geführt sind. Diese Zapfen 17 liegen mit einem Bund 18 an der nicht mit Druck beaufschlagten Stirnfläche des Ringkolbens 14 an und ragen mit ihrem anderen Ende durch eine an der linken Seite der Kupplung anliegende Druckplatte 19 hindurch, mit der sie durch Zentriermuttern 20 verschraubt sind, die in der Druckplatte 19 eingepasst sind. Bei Druckbeaufschlagung des äußeren Ringkolbens 14 wird über die Zapfen 17 die Druckplatte 19 an die linke Kupplungsscheibe 21 angedrückt und bringt diese in reibschlüssige Verbindung zu der umlaufenden Mittenplatte, so daß über die Kupplungsscheibe 21 die mit ihr mittels Kerbzahnverbindung 22 formschlüssig verbundene Zentralwelle 23 angetrieben wird. Die Zentralwelle 23 steht mit einer ersten Gruppe von Getriebegängen in Verbindung. Von der rechten Seite her ist eine zweite Kupplungsscheibe 24 an die Mittenplatte 4 durch eine Druckplatte 25 andrückbar, die von Zapfen 26 eines inneren Ringkolbens 27 betätigt wird.

Hierbei wird eine mit der Kupplungsscheibe 24 formschlüssig verbundene Hohlwelle 28 angetrieben, die zu einer zweiten Gruppe von Getriebegängen führt. Die Zapfen 26 ragen aus beiden Stirnseiten des Ringkolbens heraus, um einen Druckausgleich für den durch Rotation bedingten Hydraulikdruck zu schaffen. Sie sind einerseits in der Grundplatte 6, und andererseits in der Deckplatte 7 abgedichtet geführt. Zur Führung des inneren Ringkolbens 27 ist an der Trennebene 8 eine Ringnut 29 in die Grundplatte 6 eingedreht, die annähernd dieselbe Breite wie die äußere Ringnut 11 hat. Zur Abdichtung dient ein äußerer Dichtring 30 im Ringkolben 27 und ein innerer Dichtring 31 der in eine Ringnut der Grundplatte 6 eingelegt ist.

Zentral in der Hydraulikplatte 2 ist eine Hülse 32 gelagert, die an dem nicht gezeichneten Getriebegehäuse befestigt ist. Die Hülse 32 enthält einen Druckanschluß 33 zu dem inneren Ringkolben 27, einen Druckanschluß 34 zu dem äußeren Ringkolben 14 und einen dazwischen gelegenen Rücklaufanschluß 35 für die Hydraulikflüssigkeit. In dem Rücklaufanschluß 35 fließt bei Betätigen der Ringkolben 14 bzw. 27 die in die Rücklaufkanäle 36 bzw. 37 verdrängte Hydraulikflüssigkeit zusammen und wird durch den in Achsrichtung der Hülse 32 verlaufenden Sammelkanal 38 drucklos zu einem Vorratsbehälter geleitet.

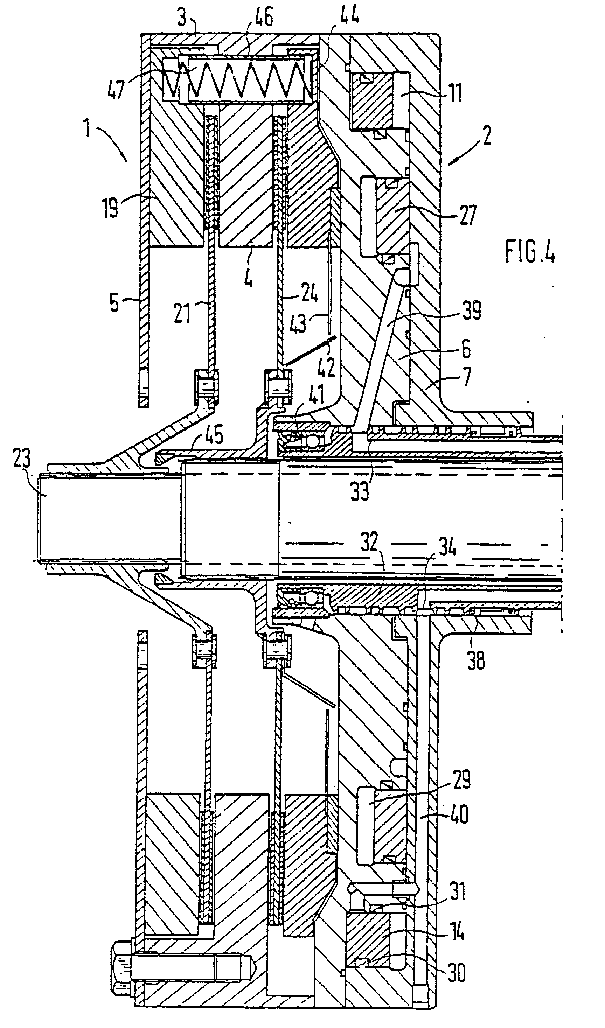

In Fig. 4 sind die von den Druckanschlüssen 33, 34 ausgehenden Druckkanäle 39 bzw. 40 zu dem inneren Ringkolben 27 bzw. dem äußeren Ringkolben 14 dargestellt. Der Druck wird so geregelt, daß er in dem einen Druckkanal Null ist, wenn er im anderen Kanal maximale Größe erreicht. Auf diese Weise werden die Kupplungsscheiben 21, 24 wechselweise betätigt, so daß immer nur eine der beiden Gruppen von Getriebegängen in den Antriebsstrang geschaltet ist. Durch eine Lippendichtung 41 wird der Ölaustritt am vorderen Ende der Hülse 32 verhindert.

Eventuell austretendes Lecköl wird durch Zentrifugalkraft auf eine Spritzhaube 42 und von dort entlang einem Spritzblech 43 durch einen Spalt 44 radial aus dem Kupplungsgehäuse 1 herausgefördert, ohne in den Trockenbereich der Kupplung eindringen zu können. Auf dem gleichen Weg werden auch kleine Leckölmengen, die sich an der Kupplungsnabe 45 ansammeln können, nach außen befördert.

In den Paßhülsen 46 liegen Druckfedern 47, die sich an beiden Druckplatten 19, 25 abstützen und deren Druckbeaufschlagung entgegenwirken. In Umfangsrichtung dazu versetzt sind durch die beiden Druckplatten 19, 25 und die Mittenplatte 4 Paßschrauben 48 gesteckt, mit denen die zwischen den Druckplatten 19, 25 und der Mittenplatte liegenden Tangentialfedern 49 verspannt werden, die in bekannter Weise der Drehmomentübertragung dienen. Um eine Unwucht der Kupplung auszugleichen, sind Stiftschrauben 50 radial in das Mantelteil 3 eingeschraubt, die bei unterschiedlichen Einschraubtiefen entsprechende Unwuchtmomente kompensieren. Nach Auswuchten sind die Stiftschrauben arretiert.

## Patentansprüche

1. Doppelkupplung zum wechselweisen Kuppeln einer Zentralwelle (23) und einer zu ihr konzentrischen Hohlwelle (28) eines Geschwindigkeitswechselgetriebes eines Kraftfahrzeugs mit dem durch die Motorkurbelwelle angetriebenen Gehäuse der Doppelkupplung, wobei eine mit der Zentralwelle (23) verbundene Kupplungsscheibe (21) von der einen Seite her, eine mit der Hohlwelle (28) verbundene Kupplungsscheibe (24) von der anderen Seite her an eine Mittenplatte (4) des umlaufenden Kupplungsgehäuses (1) durch Hydraulikkolben angedrückt wird, die als konzentrisch zueinander liegende Ringkolben (14, 27) ausgebildet sind, und wobei die Ringkolben (14, 27) in einer am Kupplungsgehäuse (1) der Doppelkupplung befestigten Hydraulikplatte (2) angeordnet und mit mehreren an den Ringstirnflächen symmetrisch verteilten Zapfen (17) versehen sind, die bei Druckbeaufschlagung der Ringkolben (14, 27) über Druckplatten (19, 25) auf die Kupplungsscheiben (21, 24) einwirken, dadurch gekennzeichnet, daß die Mittenplatte (4) an dem Kupplungsgehäuse (1) fest angebracht ist und daß die Zapfen (17) des äußeren Ringkolbens (14) als Zuganker ausgebildet sind, die im einen Endbereich der Zapfen (17) mit einem Anschlagbund (18) an der nicht druckbeaufschlagten Stirnfläche des Ringkolbens (14) anliegen, im anderen Endbereich durch Zentriermuttern (20) mit der Druckplatte (19) verschraubt sind.

2. Doppelkupplung nach Anspruch 1, dadurch gekennzeichnet, daß die Zapfen (17, 26) aus beiden Stirnflächen der Ringkolben (14, 27) herausragen und in der Hydraulikplatte (2) abgedichtet geführt sind.

3. Doppelkupplung nach Anspruch 1, dadurch gekennzeichnet, daß die Hydraulikplatte (2) aus einer am Kupplungsgehäuse (1) anliegenden Grundplatte (6) und einer Deckplatte (7) zusammengesetzt ist, und daß die Ringkolben (14, 27) in Ringnuten (11, 29) geführt sind, die an der Trennebene (8) zwischen der Grundplatte (6) und der Deckplatte (7) ausgebildet sind.

4. Doppelkupplung nach Anspruch 3, dadurch gekennzeichnet, daß die äußere Ringnut (11) durch die äußere Ringfläche (12) einer Ausdrehung der Deckplatte (7) und einen im Durchmesser kleineren Zapfenfortsatz (13) der Grundplatte (6) gebildet ist, wogegen die innere Ringnut (29) etwa mit gleicher Tiefe wie die äußere Ringnut (11) in die Grundplatte (6) eingedreht ist.

5. Doppelkupplung nach Anspruch 1, dadurch gekennzeichnet, daß die beiden Druckplatten (19, 25) unter Verspannen von zwischen sie eingelegten Druckfedern (47) zum Kupplungsgehäuse (1) längsverschieblich sind.

6. Doppelkupplung nach Anspruch 5, dadurch gekennzeichnet, daß die Druckplatten (19, 25) mit dem Kupplungsgehäuse (1) durch Tangentialfedern (49) drehmomentübertragend verbunden sind und durch Paßschrauben (48) am Kupplungsgehäuse (1) zentriert sind.

7. Doppelkupplung nach Anspruch 1, dadurch gekennzeichnet, daß die Ringkolben (14, 27) zur Abdichtung an ihren Außenflächen Nuten aufweisen, in die Dichtungsringe (15, 30) eingelegt sind, wogegen zur Abdichtung der Innenflächen der Ringkolben (14, 27) Dichtungsringe (16, 31) dienen, die in Nuten der Grundplatte (16) eingelegt sind.

8. Doppelkupplung nach Anspruch 1, dadurch gekennzeichnet, daß in der Hydraulikplatte (2) eine Hülse (32) gelagert ist, die einen Druckanschluß (34) für den äußeren Ringkolben (14), einen Druckanschluß (33) für den inneren Ringkolben (27) sowie einen zwischen den Druckanschlüssen (33, 34) liegenden gemeinsamen Rücklaufanschluß (35) für die Hydraulikflüssigkeit enthält.

9. Doppelkupplung nach einem der Ansprüche 1 bis 8, dadurch gekennzeichnet, daß sie durch radial in das Kupplungsgehäuse (1) einschraubbare und drehsichere arretierbare Stiftschrauben (50) auswuchtbar ist.

## Claims

1. A double clutch for the alternate engagement of a central shaft (23) and a hollow shaft (28) — concentric therewith — of a change-speed transmission of a motor vehicle with the housing of the double clutch driven by the engine crankshaft, one clutch disc (21) connected to the central shaft (23) being pressed from one side and one clutch disc (24) connected to the hollow shaft (28) being pressed from the other side against a central plate (4) of the rotating clutch housing (1) by hydraulic pistons which are constructed in the form of annular pistons (14, 27) arranged concentrically to each other, and the annular pistons (14, 27) being arranged in a hydraulic plate (2) secured to the housing (1) of the double clutch and being provided with a plurality of pins (17) which are distributed symmetrically on the annular end faces and which act upon the clutch discs (21, 24) when the annular pistons (14, 27) are subjected to pressure by way of pressure plates (19, 25), characterized in that the central plate (4) is firmly attached to the clutch housing (1) and the pins (17) of the outer annular piston (14) are constructed in the form of tie rods which in one end region of the pins (17) rest with a stop collar (18) against the end face of the annular piston (14) not subjected to pressure, and in the other end region are screwed to the pressure plate (19) by centring nuts (20).

2. A double clutch according to Claim 1, characterized in that the pins (17, 26) project from both end faces of the annular pistons (14, 27) and are guided in a sealed manner in the hydraulic plate (2).

3. A double clutch according to Claim 1, characterized in that the hydraulic plate (2) comprises a base plate (6) mounted on the clutch housing (1) and a cover plate (7), and the annular pistons (14, 27) are guided in annular grooves (11, 29) which are formed at the separation plane (8) between the base plate (6) and the cover plate (7).

4. A double clutch according to Claim 3, characterized in that the outer annular groove (11) is formed by the outer annular surface (12) of a recess in the cover plate (7) and an extension (13) — of smaller diameter — of the pin of the base plate (6), whereas the inner annular groove (29) is cut into the base plate (6) at approximately the same depth as the outer annular groove (11).

5. A double clutch according to Claim 1, characterized in that the two pressure plates (19, 25) are longitudinally displaceable with respect to the clutch housing (1) while stressing compression springs (47) interposed between them.

6. A double clutch according to Claim 5, characterized in that the pressure plates (19, 25) are connected to the clutch housing (1) by tangential springs (49) so as to transmit torque and are centred by dowel screws (48) on the clutch housing (1).

7. A double clutch according to Claim 1, characterized in that for sealing purposes the outer faces of the annular pistons (14, 27) are provided with grooves into which sealing rings (15, 30) are inserted, whereas sealing rings (16, 31), which are inserted into grooves in the base plate (16), are used for sealing the inner faces of the annular pistons (14, 27).

8. A double clutch according to Claim 1, characterized in that a sleeve (32), which contains a pressure connexion (34) for the outer annular piston (14), a pressure connexion (33) for the inner annular piston (27) and a common return-flow connexion (35) — lying between the pressure connexions (33, 34) — for the hydraulic fluid, is mounted in the hydraulic plate (2).

9. A double clutch according to any one of Claims 1 to 8, characterized in that it can be balanced by lockable stud bolts (50) which can be screwed radially into the clutch housing (1) and which are prevented from rotating.

## Revendications

1. Embrayage double pour accoupler de manière alternée un arbre central (23) et un arbre creux (28), lui étant concentrique, d'une boîte de changement de vitesse d'un véhicule automobile, avec le carter de l'embrayage double entraîné par l'arbre de vilebrequin du moteur, un disque d'embrayage (21) relié à l'arbre central (23), d'un côté, un disque d'embrayage (24) relié à l'arbre creux (28), de l'autre côté, étant pressé sur un plateau central du carter d'embrayage tournant (1) au moyen de pistons hydrauliques réalisés sous forme de pistons annulaires (14, 27) placés concentriquement l'un par rapport à l'autre, et les pistons annulaires (14, 27) étant disposés dans un plateau hydraulique (2) fixé sur le carter d'embrayage (1) de l'embrayage double et pourvu de plusieurs tourillons (17) répartis symétriquement sur les faces frontales annulaires, tourillons agissant sur les disques d'embrayage (21, 24) par l'intermédiaire de plaques de pression (19, 25) lors de la sollicitation en pression des pistons annulaires (14, 27), caractérisé en ce que le plateau central (4) est monté fixe sur le carter d'embrayage (1) et en ce que les tourillons (17) du piston annulaire (14) extérieur sont réalisés sous forme de tirants appuyant dans une zone d'extrémité des tourillons (17) avec une collerette de butée (18) sur la surface non sollicitée en pression du piston annulaire (14) et sont vissés à la plaque de pression (19) à l'autre zone extrémité par des écrous de centrage (20).

2. Embrayage double selon la revendication 1, caractérisé en ce que les tourillons (17, 26) émergent des deux faces frontales des pistons annulaires (14, 27) et sont guidés de manière étanche dans le plateau hydraulique (2).

3. Embrayage double selon la revendication 1, caractérisé en ce que le plateau hydraulique (2) est composé d'une plaque de base (6) appuyant sur le carter d'embrayage (1) et d'une plaque de recouvrement (7), et en ce que les pistons annulaires (14, 27) sont guidés dans des rainures annulaires (11, 29) réalisées dans le plan de séparation (8) situé entre la plaque de base (6) et la plaque de recouvrement (7).

4. Embrayage double selon la revendication 3, caractérisé en ce que la rainure annulaire (11) est formée par la face annulaire extérieure (12) d'un alésage de la plaque de recouvrement (7) et un appendice en tourillon (13), de diamètre plus petit, de la plaque de base (6), la rainure intérieure (29) étant par contre tournée dans la plaque de base (6) avec une profondeur à peu près identique à celle de la rainure annulaire extérieure (11).

5. Embrayage double selon la revendication 1, caractérisé en ce que les deux plaques de pression (19, 25) sont mobiles longitudinalement par rapport au carter d'embrayage (1) en déformant des ressorts de compression (47) placés entre elles.

6. Embrayage double selon la revendication 5, caractérisé en ce que les plaques de pression (19, 25) sont reliées au carter d'embrayage (1) en transmettant le couple de rotation au moyen de ressorts tangentiels (49) et sont centrées sur le carter d'embrayage (1) au moyen de vis calibrées (48).

7. Embrayage double selon la revendication 1, caractérisé en ce que, pour réaliser l'étanchéité, les pistons annulaires (14, 27) présentent sur leurs faces extérieures des rainures dans lesquelles sont introduites des bagues d'étanchéité (15, 30), alors que pour réaliser l'étanchéité des surfaces intérieures des pistons annulaires (14, 27) on se sert de bagues d'étanchéité (16, 31) introduites dans les rainures de la plaque de base (16).

8. Embrayage double selon la revendication 1, caractérisé en ce qu'une douille (32) est montée dans le plateau hydraulique (2), douille (32) contenant un raccordement de pression (34) pour le piston annulaire extérieur (14), un raccordement de pression (33) pour le piston annulaire intérieur (27), ainsi qu'un raccordement de retour (35) pour le fluide hydraulique, placé entre les raccordements de pression (33, 34).

9. Embrayage double selon l'une des revendications 1 à 8, caractérisé en ce qu'il est équilibrable au moyen de goujons filetés (50) vissables radialement dans le carter d'embrayage (1) et susceptibles d'être bloqués en rotation.

FIG.1

FIG.2

FIG.3

FIG.4

FIG.5